# EUROPÄISCHE PATENTSCHRIFT

(11) **EP 3 384 352 B1**
(45) Veröffentlichungstag und Bekanntmachung des Hinweises auf die Patenterteilung: **17.02.2021**
(21) Anmeldenummer: 16795021.1
(22) Anmeldetag: 11.11.2016
(51) Int. Cl.: G05B 19/042

(54) **VERFAHREN UND SYSTEM ZUR OPTIMIERUNG DER INBETRIEBNAHME VON ZUMINDEST EINEM EINER VIELZAHL VON FELDGERÄTEN DER AUTOMATISIERUNGSTECHNIK**
METHOD AND SYSTEM FOR OPTIMIZING THE COMMISSIONING OF AT LEAST ONE OF A PLURALITY OF AUTOMATION TECHNOLOGY FIELD DEVICES
PROCÉDÉ ET SYSTÈME D'OPTIMISATION DE LA MISE EN SERVICE D'AU MOINS UN APPAREIL DE CHAMP D'UNE PLURALITÉ D'APPAREILS DE CHAMP DE LA TECHNIQUE D'AUTOMATISATION

(30) Priorität: 30.11.2015 DE 102015120731
(43) Veröffentlichungstag der Anmeldung: 10.10.2018
(73) Patentinhaber: Endress+Hauser Process Solutions AG, 4153 Reinach (CH)
(72) Erfinder: NICK, Markus, 68680 Kembs (DE); BARET, Marc, 68680 Kembs (FR); HAUSS, Georg, 79102 Freiburg (DE); KAISER, Ulrich, 4057 Basel (CH); MANEVAL, Michael, 79650 Schopfheim (DE)
(74) Vertreter: Andres, Angelika Maria
(86) Internationale Anmeldenummer: PCT/EP2016/077387
(87) Internationale Veröffentlichungsnummer: WO 2017/093000

(56) Entgegenhaltungen:
- DE-A1-102007 063 312
- DE-A1-102010 042 999
- DE-A1-102010 062 661

## Beschreibung

Die Erfindung betrifft ein Verfahren und ein System zur Optimierung der Inbetriebnahme von zumindest einem einer Vielzahl von Feldgeräten in einer Anlage der Automatisierungstechnik, die in unterschiedlichen Applikationen eingesetzt sind.

Aus dem Stand der Technik sind bereits Feldgeräte bekannt geworden, die in industriellen Anlagen zum Einsatz kommen. In der Automatisierungstechnik, insbesondere der Prozessautomatisierung und der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, pH-Messung, Durchflussmessung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

Feldgeräte, die in eine neue Applikation einer Prozessanlage integriert werden, oder Austauschfeldgeräte, die ein veraltetes oder defektes Feldgerät einer Applikation ersetzen, müssen spezifisch auf jeweilige Applikation angepasst werden. Dafür werden diese Feldgeräte während oder nach der Fertigung konfiguriert und parametriert. Die Konfiguration beschreibt zum einen die hardwareseitige Konfiguration, beispielsweise das Flanschmaterial eines Durchflussmessgerätes, als auch die softwareseitige Konfiguration. Unter Parametrierung versteht man das Definieren und Festlegen von Parametern, mit deren Hilfe der Betrieb des Feldgerätes auf die jeweiligen Merkmale der Applikation, beispielsweise das Messmedium, eingestellt wird.

Ab Werk besitzen alle Feldgeräte eines gleichen Gerätetyps und/oder einer gleichen Konfiguration dieselbe Anzahl an Parametern und denselben, voreingestellten Standardparametersatz. Die spezifische Anpassung einzelner Parameter ist durch die mitunter hohe Anzahl an Parametern, oftmals bis zu mehreren hundert verschiedenen Parametern, äußerst komplex und mit einem hohen manuellen Aufwand verbunden. Für den Kunden ist eine spezifische Anpassung der Parameter an die jeweilige Applikation somit häufig nicht anwendbar.

Viele Parameter sind außerdem voneinander abhängig, so dass eine einzelne Parameteränderung durch einen unerfahrenen Kunden mitunter zu einer Funktionsminderung des Feldgeräts führen kanr

DE 10 2010 062661 A1 offenbart ein Verfahren zum Bedienen von Feldgeräten in einer Automatisierungsanlage.

DE 10 2007 063312 A1 offenbart ein Parametriersystem und Verfahren zur Parametrierung eines Feldgeräts.

Der Erfindung liegt somit die Aufgabe zugrunde, ein Verfahren und ein System vorzustellen, um die Parametrierung und/oder Änderung von Parameterwerten eines Feldgeräts für den Kunden zu erleichtern.

Die Aufgabe wird durch ein Verfahren zur Optimierung der Inbetriebnahme von zumindest einem einer Vielzahl von Feldgeräten gemäß Patentanspruch 1 gelöst.

Durch das erfindungsgemäße Verfahren ist eine vereinfachte Inbetriebnahme eines Feldgeräts möglich. Dadurch, dass die Applikationsinformationen einer großen Zahl von Feldgeräten ermittelt werden und den ermittelten aktuellen Parametersätzen zugeordnet werden, können die Parametersätze der Feldgeräte auf die jeweilige Applikation optimiert werden.

Das Feldgerät wird, abhängig von dem verwendeten Algorithmus, beispielsweise mit denjenigen Parametern parametriert, welche für die jeweilige Applikation in vergangenen Anwendungen am häufigsten verwendet wurden.

Des Weiteren bildet das erfindungsgemäße Verfahren eine große Erfahrungsgrundlage, um zukünftige neue Feldgeräte einfacher und optimiert herzustellen, beziehungsweise um die Treiber ("Device Type Manager", DTMs) der zukünftigen Feldgeräte optimiert zu programmieren.

Feldgeräte, die im Zusammenhang mit der Erfindung beschrieben werden, sind in der Einleitung der vorliegenden Anmeldung beispielhaft beschrieben.

Als Applikation wird eine Anwendung innerhalb der Anlage oder einer Prozessstelle der Anlage bezeichnet, wie beispielsweise eine Durchflussmessung eines Mediums.

In einer vorteilhaften Ausgestaltung des erfindungsgemäßen Verfahrens ist vorgesehen, dass für den Fall, dass in den aktuellen Parametersätzen enthaltene Parameter voneinander abhängig sind, lediglich ein Basisparameter im Vorschlag angezeigt wird. Dadurch sinkt die Anzahl der für den Benutzer sichtbaren Parameter.

In einer Weiterbildung des erfindungsgemäßen Verfahrens wird aus dem optimalen Parametersatz ein applikationsspezifischer Standardparametersatz erstellt. Dadurch ist es möglich, Feldgeräte bereits ab Werk für eine bestimmte Applikation anzubieten. Die Inbetriebnahme wird dadurch für den Kunden erheblich vereinfacht und die Dauer der Inbetriebnahme weiter verkürzt.

In einer Ausgestaltung des erfindungsgemäßen Verfahrens wird der Standardparametersatz manuell optimiert.

In einer bevorzugten Ausgestaltung des erfindungsgemäßen Verfahrens ist vorgesehen, dass Kommentare zu einzelnen Parametern des Standardparametersatzes für spätere Nutzung als Bestandteil des Vorschlags erstellt und gespeichert werden. Dadurch wird die Entscheidung des Kunden für oder gegen den Vorschlag erleichtert.

Eine bevorzugte Variante des erfindungsgemäßen Verfahrens sieht vor, dass der optimale Parametersatz in statische Parameter, deren bisher am häufigsten verwendete Parameterwerte zeitlich unveränderlich sind, und dynamische Parameter separiert wird. Dynamische Parameter enthalten nicht modellierte Prozesscharakteristika, die vom Kunden manuell eingegeben werden, wie beispielsweise die Tankgröße eines mit Medium gefüllten Tanks.

Eine besonders vorteilhafte Weiterbildung des erfindungsgemäßen Verfahrens sieht für den Fall, dass keine dynamischen Parameter verfügbar sind, vor, das Feldgerät mit dem für die jeweilige Applikation optimalen Parametersatz parametriert wird.

In einer vorteilhaften Ausgestaltung des erfindungsgemäßen Systems wird der Benutzer bei der Parametrisierung des Feldgeräts zur Anpassung des optimalen Parametersatzes bezüglich dynamischer Parameter durch die Software unterstützt.

In einer besonders vorteilhaften Ausgestaltung des erfindungsgemäßen Systems wird der Benutzer bei der Parametrisierung des Feldgeräts zur Anpassung des optimalen Parametersatzes bezüglich dynamischer Parameter durch einen in der Software implementierten Assistenten unterstützt. Diese Ausgestaltung des erfindungsgemäßen Verfahrens ist dadurch für den Kunden in einfacher Art und Weise ausführbar, da der Kunde bei jedem der Verfahrensschritte von dem Assistenten begleitet wird.

In einer besonders bevorzugten Weiterbildung des erfindungsgemäßen Systems wird der Benutzer bei der Parametrisierung des Feldgeräts zur Anpassung bezüglich der dynamischen Parameter durch einem in einem Geräte-DTM des Feldgeräts implementierten Assistenten unterstützt. Diese Weiterbildung des erfindungsgemäßen Verfahrens ist dadurch für den Kunden in einfacher Art und Weise ausführbar, da der Kunde bei jedem der Verfahrensschritte von dem Assistenten begleitet wird. Ein DTM, "Device Type Manager", ist ein Treiber, der analog zu beispielsweise einem Druckertreiber eine gerätespezifische Software-Komponente darstellt, welche Daten für das Gerät aufbereitet.

In einer bevorzugten Weiterbildung des erfindungsgemäßen Systems ist vorgesehen, dass ein Validitätsgrad von jedem der optimalen Parametersätze erstellt wird, wobei der Validitätsgrad Informationen über die Häufigkeit der jeweiligen erfolgreichen Applikation und/oder der jeweiligen erfolgreichen Wiederverwendung der optimalen Parametersätze enthält.

In einer vorteilhaften Ausgestaltung des erfindungsgemäßen Verfahrens wird mittels einer Software eine Parametrierhistorie der Vielzahl der Feldgeräte erstellt. Damit ist für den Kunden jederzeit ein Überblick über bisherige Parametrisierungen gegeben. Des Weiteren wird durch diese Ausgestaltung das erfindungsgemäße Verfahren weiter zeitlich optimiert.

Des Weiteren wird die Aufgabe durch ein System zur Optimierung der Bedienung einer Vielzahl an Feldgeräten gemäß Patentanspruch 13 gelöst.

Eine vorteilhafte Ausgestaltung des erfindungsgemäßen Systems sieht vor, dass es sich bei den Applikationsinformationen Konfigurations-, Messverfahrens- und/oder Messaufgabendaten eines Feldgeräts handelt. Allgemein ausgedrückt stellen Applikationsinformationen jene Informationen dar, die ein Feldgerät in Bezug auf seine Applikation hinreichend beschreiben.

In einer besonders vorteilhaften Variante des erfindungsgemäßen Systems ist die entfernt angeordnete Datenbank und/oder die Recheneinheit mittels Cloud Computing WebServices erreichbar. Unter Cloud Computing wird in diesem Fall das Speichern von Daten in einem entfernten Rechenzentrum, in diesem Fall in einer entfernten Datenbank, beschrieben. Der Vorteil besteht darin, dass eine Zentralisierung der Datenbestände erfolgt, da jedes Feldgerät seine Daten in Form von Gerätetypen und Diagnosemeldungen auf diese Datenbank speichert.

In einer vorteilhaften Weiterbildung des erfindungsgemäßen Systems ist vorgesehen, dass in der Software eine zeitliche Verfolgung der Parameterhistorie der Vielzahl von Feldgeräten implementiert ist.

Eine besonders bevorzugte Ausgestaltung des erfindungsgemäßen Systems sieht vor, dass die Software auf der Recheneinheit, auf einem Computer des Benutzers und/oder auf jedem der Vielzahl der Feldgeräte implementiert ist. Der Zugriff der Software auf die Datenbank erfolgt über ein oder mehrere Netzwerke, an die die Recheneinheit, der Computer des Benutzers und/oder jedes der Vielzahl der Feldgeräte angeschlossen ist. Im Prinzip kann hierfür jedes gebräuchliche Protokoll eines WAN- oder LAN-Netzwerks verwendet werden. Es kann aber auch ein Feldbusnetzwerk der Automatisierungstechnik, wie Foundation Fieldbus®, Profibus®, HART®, Modbus®, etc. verwendet werden, das beispielsweise über ein Gateway mit dem Internet verbunden ist. Die Software kann auch als Applikationssoftware auf einem mobilen Endgerät, wie einem Smartphone oder einem Tablet befinden.

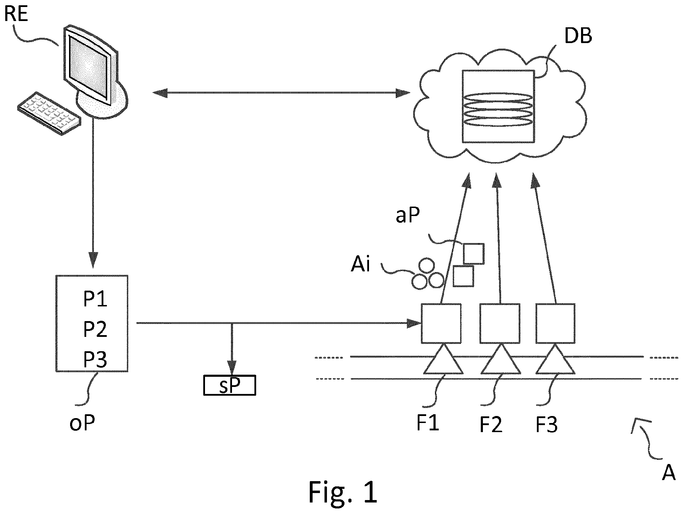

Die Erfindung wird anhand der nachfolgenden Figur näher erläutert. Es zeigt
Fig. 1: eine Ausgestaltung des erfindungsgemäßen Verfahrens zur Bedienung von zumindest einem einer Vielzahl von Feldgeräten in einer Anlage der Automatisierungstechnik.

Fig. 1 zeigt eine Ausgestaltung des erfindungsgemäßen Verfahrens zur Bedienung von zumindest einem einer Vielzahl von Feldgeräten F1, F2, F3 in einer Anlage A der Automatisierungstechnik.

Die Feldgeräte F1, F2, F3 befinden sich in derselben Anlage A und werden in derselben Applikation oder in voneinander verschiedenen Applikationen eingesetzt. Beispielsweise handelt es sich hier bei Feldgerät F1 und Feldgerät F3 um Durchflussmesser nach dem Ultraschallprinzip, bei Feldgerät F2 um einen Temperaturfühler.

Von jedem der Feldgeräte F1, F2, F3 werden Applikationsinformationen Ai und der jeweilige Gerätetyp erhoben. Bei den Applikationsinformationen Ai handelt es sich insbesondere um Konfigurations-, Messverfahrens- und/oder Messaufgabendaten eines Feldgeräts, wie beispielsweise die Art des Mediums oder der Flanschgröße eines Messrohrs bei einem Durchflussmessgerät. Allgemein ausgedrückt stellen Applikationsinformationen Ai jene Informationen dar, die ein Feldgerät F1, F2, F3 in Bezug auf seine Applikation hinreichend beschreiben. Die Applikationsinformationen Ai werden direkt von den jeweiligen Feldgeräten F1, F2, F3 zu einer Datenbank DB gesendet und dort von der Datenbank DB gespeichert. Alternativ kann ein Teil der Applikationsinformationen Ai oder auch alle Applikationsinformationen Ai auch manuell in die Datenbank DB eingegeben werden, beispielsweise von einem Techniker, welcher ein Feldgerät F1, F2, F3 vor Ort in Betrieb nimmt. Eine weitere Alternative ist, dass eine Software, beispielweise eine Parametrierungssoftware, die Applikationsdaten Ai der Feldgeräte F1, F2, F3 ausliest und an die Datenbank DB sendet.

Bei der entfernt angeordnete Datenbank DB handelt es sich um eine Datenbank DB, die mittels Cloud Computing WebServices erreichbar ist. Unter Cloud Computing wird in diesem Fall das Speichern von Daten in einem entfernten Rechenzentrum, in diesem Fall in einer entfernten Datenbank DB, beschrieben. Der Vorteil besteht darin, dass eine Zentralisierung der Datenbestände erfolgt, da jedes Feldgerät F1, F2, F3 seine Daten in Form von Applikationsinformationen Ai auf diese Datenbank speichert.

Das Senden der Applikationsinformationen Ai an die Datenbank DB erfolgt über ein oder mehrere Netzwerke, an die jedes der Vielzahl der Feldgeräte angeschlossen ist. Im Prinzip kann hierfür jedes gebräuchliche Protokoll eines WAN- oder LAN-Netzwerks verwendet werden. Es kann aber auch ein Feldbusnetzwerk der Automatisierungstechnik, wie Foundation Fieldbus®, Profibus®, HART®, Modbus®, etc. verwendet werden, das beispielsweise über ein Gateway mit dem Internet verbunden ist.

Die auf der Datenbank DB gespeicherten Applikationsinformationen Ai werden anschließend von einer Recheneinheit RE klassifiziert. Ein Benutzer kann auf die Recheneinheit RE, wie schon auf die Datenbank DB, mittels Cloud Computing zugreifen. Der Zugriff erfolgt beispielsweise mittels einem internetfähigen Computer oder einem mobilen Endgerät, wie einem Tablet-PC oder einem Smartphone.

Alternativ kann der internetfähige Computer des Benutzers, oder dessen mobiles Endgerät, die Rolle der Recheneinheit RE übernehmen, auf die Datenbank DB zugreifen und der Recheneinheit RE zugeordneten Aufgaben übernehmen.

Anschließend werden von den Feldgeräten F1, F2, F3 Parametersätze aP erhoben. Auch hier können diese Parametersätze aP, sP von den jeweiligen Feldgeräten F1, F2, F3 selbst an die Datenbank DB gesendet werden, oder manuell in die Datenbank DB eingegeben werden. Auch bei diesem Schritt kann als weitere Alternative eine Software, beispielweise eine Parametrierungssoftware, die Parametersätze aP, sP der Feldgeräte F1, F2, F3 auslesen und an die Datenbank DB senden. Parametersätze aP enthalten zumindest einen Parameter P1, P2, P3 und jedem Parameter P1, P2, P3 ist ein Parameterwert oder ein Parameterwertebereich zugeordnet. Bei den Parametersätzen aP handelt es sich um die aktuellen Parametersätze aP, mit denen das jeweilige Feldgerät F1, F2, F3 betrieben wird. Die Parametersätze aP werden von der Recheneinheit RE den jeweiligen auf der Datenbank DB gespeicherten Applikationsinformationen Ai zugeordnet und auf der Datenbank DB gespeichert.

Feldgeräte F1, F2, F3 besitzen mitunter eine sehr große Anzahl an verschiedenen Parametern P1, P2, P3. In der Praxis wird von einem Kunden in einer Applikation mitunter nur ein Bruchteil der Parameter P1, P2, P3 benötigt.

Um einen optimalen Parametersatz oP mit applikationsspezifischen optimalen Parameterwerten zu ermitteln, werden sämtliche Parameterwerte aller Feldgeräte F1, F2, F3 einer Applikation verglichen. Mittels eines Algorithmus, der in der Recheneinheit RE implementiert ist, werden die optimalen Parameterwerte ermittelt. Beispielsweise können das diejenigen gespeicherten Parameterwerte sein, die für einen jeweiligen Parameter P1, P2, P3 am häufigsten vorkommen. Es können auch andere Auswahlmechanismen im Algorithmus gespeichert sein, bspw. Bestimmung eines Mittelwerts oder eines Medianwerts über alle gespeicherten Parameterwerte eines jeweiligen Parameters P1, P2, P3.

Dem Kunden wird anschließend ein Vorschlag für den optimalen Parametersatz oP angezeigt. Für den Fall, dass in den aktuellen Parametersätzen aP enthaltene Parameter P1, P2, P3 voneinander abhängig sind, wird dem Kunden lediglich ein Basisparameter im Vorschlag angezeigt. Akzeptiert der Kunde diesen Vorschlag, so wird der aktuelle Parametersatz aP mit dem optimalen Parametersatz oP ersetzt. Auf diese Art und Weise wird dem Kunden die manuelle Parametrierung abgenommen und das Feldgerät F1, F2, F3 wird für die jeweilige Applikation optimal parametriert.

Zuletzt wird auch der optimale Parametersatz oP in der Datenbank DB gespeichert, um das Verfahren sukzessive zu optimieren.

Zu jedem optimalen Parametersatz oP kann ein Validitätsgrad bestimmt werden. Ein Validitätsgrad enthält Informationen über die Häufigkeit der jeweiligen erfolgreichen Applikation und/oder der jeweiligen erfolgreichen Wiederverwendung des jeweiligen optimalen Parametersätze oP. Falls es beispielsweise bei der Auswertung der häufigsten Parameterwerte zu mehreren Ergebnissen kommt, werden die verschiedenen Optionen zusammen mit dem jeweiligen Validitätsgrad angezeigt. Der Kunde kann dadurch eine bewusste Entscheidung für Parameterwerte P1', P2' des optimalen Parametersatzes oP anhand des Validitätsgrades treffen. Je höher der Validitätsgrad ist, desto eher ist der jeweilige optimale Parametersatz oP für die jeweilige Applikation geeignet.

Besitzt ein optimaler Parametersatz oP einen sehr hohen Validitätsgrad, so kann aus diesem optimalen Parametersatz oP ein applikationsspezifischer Standardparametersatz sP erstellt werden. Dieser kann bereits ab Werk in Feldgeräten F1, F2, F3 derselben Applikation implementiert werden.

Die Parametrisierung des Feldgeräts F1, F2, F3 erfolgt über eine Software. Die Software erstellt des Weiteren eine Parametrierhistorie. Die Software kann sich dabei auf der Recheneinheit RE, auf einem Gerät des Kunden, wie einem Computer oder einem mobilen Endgerät, wie einem Tablet oder einem Smartphone, oder direkt auf jedem der Vielzahl der Feldgeräte F1, F2, F3 befinden.

Enthält der optimale Parametersatz oP dynamische Parameter, so müssen die Werte von diesem von dem Kunden manuell eingegeben werden. Die Software vereinfacht dem Kunden dabei bei der Eingabe, beispielsweise mittels eines in der Software implementierten Assistenten. Der Kunden muss dann beispielsweise nur einen Basisparameter von einer Menge abhängiger dynamischer Parameter einstellen. Dieser kann sich aber auch direkt auf dem Gerätetreiber, bspw. einem DTM ("Device Type Manager") befinden.

Es versteht sich von selbst, dass das Verfahren auf jegliche Art und Anzahl von Feldgeräten F1, F2, F3 anwendbar ist und nicht auf die in dieser Ausgestaltung verwendeten Beispiele der Feldgeräte F1, F2, F3 und deren Parameter P1, P2, P3 beschränkt ist.

### Bezugszeichenliste

- A: Anlage
- Ai: Applikationsinformationen
- aP: aktueller Parametersatz
- DB: Datenbank
- F1, F2, F3: Feldgeräte
- oP: optimaler Parametersatz
- P1, P2, P3: Parameter
- RE: Recheneinheit
- sP: applikationsspezifischer Standardparametersatz

## Patentansprüche

1. Verfahren zur Optimierung der Inbetriebnahme von zumindest einem einer Vielzahl von Feldgeräten (F1, F2, F3) in einer Anlage (A) der Automatisierungstechnik, die in unterschiedlichen Applikationen eingesetzt sind, umfassend folgende Schritte:
- Erheben von Applikationsinformationen (Ai) und Gerätetypen der Vielzahl der Feldgeräte (F1, F2, F3), wobei die Applikationsinformationen (Ai) jedes der Vielzahl der Feldgeräte (F1, F2, F3) hinsichtlich seiner Applikation eindeutig beschreiben;
- Klassifizieren der Applikationsinformationen (Ai) der Vielzahl der Feldgeräte (F1, F2, F3) mittels einer elektronischen Recheneinheit (RE) und Speichern der klassifizierten Applikationsinformationen (Ai) auf einer entfernt angeordneten Datenbank (DB);
- Erheben von Parametersätzen (aP) von jedem der Vielzahl der Feldgeräte (F1, F2, F3), wobei die Parametersätze (aP) aus mehreren Parametern (P1, P2, P3) bestehen und jedem Parameter (P1, P2, P3) ein Parameterwert zugeordnet ist und jedes Feldgerät zumindest einen aktuellen Parametersatz (aP) besitzt, und Speichern der Parametersätze (aP) auf der entfernt angeordneten Datenbank;
- Zuordnen der aktuellen Parametersätze der Vielzahl der Feldgeräte (F1, F2, F3) zu den klassifizierten Applikationsinformationen (Ai) und den Gerätetypen mittels der elektronischen Recheneinheit (RE);
- Erstellen eines optimalen Parametersatzes (oP) aus den Parametersätzen von gleichen oder ähnlichen Gerätetypen für gleiche Applikationen mittels eines Algorithmus der Recheneinheit[Anspruch 13] durch Vergleichen sämtlicher Parameterwerte aller Feldgeräte (F1, F2, F3) einer Applikation;
- Vorschlagen des optimalen Parametersatzes (oP) für zumindest eines der Vielzahl der Feldgeräte (F1) anhand dessen Applikation mittels des Algorithmus der Recheneinheit (RE);
- Ersetzen des aktuellen Parametersatzes (aP) des Feldgeräts (F1) durch den für die Applikation des Feldgeräts (F1) optimalen Parametersatz (oP) für den Fall, dass der Vorschlag ganz oder teilweise angenommen wird und Ablegen des optimalen Parametersatzes in der entfernt angeordneten Datenbank (DB).

2. Verfahren nach Anspruch 1, wobei für den Fall, dass in den aktuellen Parametersätzen (aP) enthaltene Parameter (P1, P2, P3) voneinander abhängig sind, lediglich ein Basisparameter im Vorschlag angezeigt wird.

3. Verfahren nach zumindest einem der Ansprüche 1 oder 2, wobei aus dem optimalen Parametersatz (oP) ein applikationsspezifischer Standardparametersatz (sP) erstellt wird.

4. Verfahren nach zumindest einem der vorherigen Ansprüche, wobei der Standardparametersatz (sP) manuell optimiert wird.

5. Verfahren nach Anspruch 4, wobei Kommentare zu einzelnen Parametern des Standardparametersatzes für spätere Nutzung als Bestandteil des Vorschlags erstellt und gespeichert werden.

6. Verfahren nach zumindest einem der vorherigen Ansprüche, wobei der optimale (oP) Parametersatz in statische Parameter, deren Parameterwerte zeitlich unveränderlich sind, und dynamische Parameter separiert wird.

7. Verfahren nach Anspruch 6, wobei für den Fall, dass keine dynamischen Parameter verfügbar sind, das Feldgerät mit dem für die jeweilige Applikation optimalen Parametersatz (oP) parametriert wird.

8. Verfahren nach zumindest einem der Ansprüche 6 oder 7, wobei der Benutzer bei der Inbetriebnahme des Feldgeräts (F1) zur Anpassung des optimalen Parametersatzes (oP) bezüglich dynamischer Parameter durch eine Software unterstützt wird.

9. Verfahren nach zumindest einem der Ansprüche 6 oder 7, wobei der Benutzer bei der Inbetriebnahme des Feldgeräts (F1) zur Anpassung des optimalen Parametersatzes (oP) bezüglich dynamischer Parameter durch einen in einer Software implementierten Assistenten unterstützt wird.

10. Verfahren nach zumindest einem der Ansprüche 6 oder 7, wobei der Benutzer bei der Inbetriebnahme des Feldgeräts (F1) zur Anpassung bezüglich der dynamischen Parameter durch einem in einem Geräte-DTM des Feldgeräts implementierten Assistenten unterstützt wird.

11. Verfahren nach zumindest einem der vorherigen Ansprüche, wobei ein Validitätsgrad für jeden der optimalen Parametersätze (oP) erstellt wird, wobei der Validitätsgrad Informationen über die Häufigkeit der jeweiligen erfolgreichen Applikation und/oder der jeweiligen erfolgreichen Wiederverwendung der optimalen Parametersätze (oP) enthält.

12. Verfahren nach zumindest einem der vorherigen Ansprüche, wobei mittels einer Software eine Parametrierhistorie der Vielzahl der Feldgeräte (F1, F2, F3) erstellt wird.

13. System zur Optimierung der Inbetriebnahme von zumindest einem einer Vielzahl von Feldgeräten (F1, F2, F3)) in einer Anlage (A) der Automatisierungstechnik, das zur Durchführung des Verfahrens nach zumindest einem der Ansprüche 1 bis 12 konfiguriert ist, zumindest umfassend
- Eine entfernt angeordnete Datenbank (DB) zum Speichern von Applikationsinformationen und Gerätetypen der Vielzahl der Feldgeräte (F1, F2, F3) und zum Speichern von Parametersätzen (aP, sP, oP) der Vielzahl von Feldgeräten (F1, F2, F3);
- eine elektronische Recheneinheit (RE), die auf die entfernt angeordnete Datenbank (DB) zugreift und die dort gespeicherten Daten klassifiziert, zuordnet, vergleicht und/oder bearbeitet und einen Algorithmus zum Erstellen und Vorschlagen eines optimalen Parametersatzes (oP) besitzt;
- eine Software zum Unterstützen eines Benutzers bei der Inbetriebnahme eines der Vielzahl der Feldgeräte (F1), wobei die elektronische Recheneinheit (RE) mittels der Software bedient wird.

14. System nach Anspruch 13, wobei es sich bei den Applikationsinformationen eines Feldgeräts (F1, F2, F3) um dessen Konfigurations-, Messverfahrens- und/oder Messaufgabendaten handelt.

15. System nach zumindest einem der Ansprüche 13 oder 14, wobei die entfernt angeordnete Datenbank (DB) und/oder die Recheneinheit (RE) mittels Cloud Computing WebServices erreichbar ist, und/oder
wobei in der Software eine zeitliche Verfolgung der Parameterhistorie der Vielzahl von Feldgeräten (F1, F2, F3) implementiert ist, und/oder
wobei die Software auf der Recheneinheit (RE), auf einem Computer des Benutzers und/oder auf jedem der Vielzahl der Feldgeräte (F1, F2, F3) implementiert ist.

## Claims

1. Method for optimizing the commissioning of at least one field device among multiple field devices (F1, F2, F3) in an automation engineering installation (A), which are used in different applications, said method comprising the following steps:
- Collection of application information (Ai) and device types of the multiple field devices (F1, F2, F3), wherein the application information (Ai) uniquely describes each of the multiple field devices (F1, F2, F3) with regard to its application;
- Classification of the application information (Ai) of the multiple field devices (F1, F2, F3) using an electronic computing unit (RE) and storage of the classified application information (Ai) on a database (DB) arranged remotely;
- Collection of parameter sets (aP) from each field device among the multiple field devices (F1, F2, F3), wherein the parameter sets (aP) consist of multiple parameters (P1, P2, P3) and wherein a parameter value is assigned to each parameter (P1, P2, P3) and every field device has at least a current parameter set (aP), and storage of the parameter sets (aP) on the database arranged remotely;
- Assignment of the current parameter sets of the multiple field devices (F1, F2, F3) to the classified application information (Ai) and the device types using the electronic computing unit (RE);
- Creation of an optimum parameter set (oP) from the parameter sets of identical or similar device types for same applications using an algorithm of the computing unit [Claim 13] by comparing all the parameter values of all the field devices (F1, F2, F3) of an application;
- Proposal of an optimum parameter set (oP) for at least one field device among the multiple field devices (F1) on the basis of its application using the algorithm of the computing unit (RE) ;
- Replacement of the current parameter set (aP) of the field device (F1) with the optimum parameter set (oP) for the application of the field device (F1) in the event that the proposal is fully or partially accepted and storage of the optimum parameter set in the database (DB) arranged remotely.

2. Method as claimed in Claim 1, wherein in the event that parameters (P1, P2, P3) included in the current parameter sets (aP) are interdependent, only one basic parameter is displayed in the proposal.

3. Method as claimed in at least one of the Claims 1 or 2, wherein an application-specific standard parameter set (sP) is created from the optimum parameter set (oP).

4. Method as claimed in at least one of the previous claims, wherein the standard parameter set (sP) is optimized manually.

5. Method as claimed in Claim 4, wherein comments on the individual parameters of the standard parameter set are created and saved for later use as an integral part of the proposal.

6. Method as claimed in at least one of the previous claims, wherein the optimum parameter set (oP) is separated into static parameters whose parameter values do not change over time and dynamic parameters.

7. Method as claimed in Claim 6, wherein in the event that no dynamic parameters are available the field device is parameterized with the optimum parameter set (oP) for the respective application.

8. Method as claimed in at least one of the Claims 6 or 7, wherein, during the commissioning of the field device (F1), the user is supported by a software for the adaptation of the optimum parameter set (oP) with regard to dynamic parameters.

9. Method as claimed in at least one of the Claims 6 or 7, wherein, during the commissioning of the field device (F1), the user is supported by a wizard implemented in a software for the adaptation of the optimum parameter set (oP) with regard to dynamic parameters.

10. Method as claimed in at least one of the Claims 6 or 7, wherein, during the commissioning of the field device (F1), the user is supported by a wizard implemented in a device DTM of the field device for adaptation with regard to the dynamic parameters.

11. Method as claimed in at least one of the previous claims, wherein a degree of validity is established for each of the optimum parameter sets (oP), wherein the degree of validity contains information about the frequency of the respective successful application and/or the respective successful reuse of the optimum parameter sets (oP).

12. Method as claimed in at least one of the previous claims, wherein a parameter history of the multiple field devices (F1, F2, F3) is created using a software.

13. System for optimizing the commissioning of at least one field device among several field devices (F1, F2, F3) in an automation engineering installation (A), said system being configured to carry out the method as claimed in at least one of the Claims 1 to 12 and comprising at least
- a database (DB) arranged remotely and designed to save application information and device types of the multiple field devices (F1, F2, F3) and to save parameter sets (aP, sP, oP) of the multiple field devices (F1, F2, F3);
- an electronic computing unit (RE), which accesses the database (DB) arranged remotely and classifies, assigns, compares and/or processes the data saved in the database and has an algorithm to create and propose an optimum parameter set (oP);
- a software to support the user to commission a field device among multiple field devices (F1), wherein the electronic computing unit (RE) is operated using the software.

14. System as claimed in Claim 13, wherein the application information of a field device (F1, F2, F3) refers to the device's configuration data, measurement process data and/or measurement task data.

15. System as claimed in at least one of the Claims 13 or 14, wherein the database (DB) arranged remotely and/or the computing unit (RE) is/are accessible using cloud computing web services, and/or
wherein tracking, over time, of the parameter history of the multiple field devices (F1, F2, F3) is implemented in the software, and/or
wherein the software is implemented on the computing unit (RE), on a computer of the user and/or on each of the multiple field devices (F1, F2, F3).

## Revendications

1. Procédé destiné à l'optimisation de la mise en service d'au moins un appareil de terrain parmi une pluralité d'appareils de terrain (F1, F2, F3) dans une installation (A) de la technique d'automatisation, lequel procédé est utilisé dans différentes applications et comprend les étapes suivantes :
- Collecte des informations d'application (Ai) et des types d'appareil de la pluralité d'appareils de terrain (F1, F2, F3), les informations d'application (Ai) décrivant de manière unique chaque appareil parmi la pluralité d'appareils de terrain (F1, F2, F3) en ce qui concerne son application ;
- Classification des informations d'application (Ai) de la pluralité d'appareils de terrain (F1, F2, F3) au moyen d'une unité de calcul électronique (RE) et stockage des informations d'application (Ai) classifiées dans une base de données (DB) disposée à distance ;
- Collecte des jeux de paramètres (aP) à partir de chaque appareil de terrain parmi la pluralité d'appareils de terrain (F1, F2, F3), les jeux de paramètres (aP) consistant en une pluralité de paramètres (P1, P2, P3), chaque paramètre (P1, P2, P3) étant associé à une valeur de paramètre et chaque appareil de terrain possédant au moins un jeu de paramètres actuel (aP), et stockage des jeux de paramètres (aP) sur la base de données disposée à distance ;
- Affectation des jeux de paramètres actuels de la pluralité d'appareils de terrain (F1, F2, F3) aux informations d'application (Ai) classifiées et aux types d'appareils au moyen de l'unité de calcul électronique (RE) ;
- Création d'un jeu de paramètres optimal (oP) à partir des jeux de paramètres de types d'appareils identiques ou similaires pour les mêmes applications au moyen d'un algorithme de l'unité de calcul [revendication 13] en comparant toutes les valeurs de paramètre de tous les appareils de terrain (F1, F2, F3) d'une application ;
- Proposition du jeu de paramètres optimal (oP) pour au moins un appareil de terrain parmi la pluralité d'appareils de terrain (F1) en fonction de son application au moyen de l'algorithme de l'unité de calcul (RE) ;
- Remplacement du jeu de paramètres actuel (aP) de l'appareil de terrain (F1) par le jeu de paramètres optimal (oP) pour l'application de l'appareil de terrain (F1), dans le cas où la proposition est acceptée en tout ou en partie, et stockage du jeu de paramètres optimal dans la base de données (DB) disposée à distance.

2. Procédé selon la revendication 1, pour lequel, dans le cas où les paramètres (P1, P2, P3) inclus dans les jeux de paramètres actuels (aP) sont interdépendants, un seul paramètre de base est affiché dans la proposition.

3. Procédé selon au moins l'une des revendications 1 ou 2, pour lequel un jeu de paramètres standard (sP) spécifique à l'application est créé à partir du jeu de paramètres optimal (oP).

4. Procédé selon au moins l'une des revendications précédentes, pour lequel le jeu de paramètres standard (sP) est optimisé manuellement.

5. Procédé selon la revendication 4, pour lequel des commentaires sur les différents paramètres du jeu de paramètres standard sont créés et stockés pour être utilisés ultérieurement en tant qu'élément de la proposition.

6. Procédé selon au moins l'une des revendications précédentes, pour lequel le jeu de paramètres optimal (oP) est séparé en paramètres statiques, dont les valeurs de paramètre sont invariables dans le temps, et en paramètres dynamiques.

7. Procédé selon la revendication 6, pour lequel dans le cas où aucun paramètre dynamique n'est disponible, l'appareil de terrain est paramétré avec le jeu de paramètres optimal (oP) pour l'application respective.

8. Procédé selon au moins l'une des revendications 6 ou 7, pour lequel l'utilisateur est assisté par un logiciel lors de la mise en service de l'appareil de terrain (F1) pour l'adaptation du jeu de paramètres optimal (oP) concernant les paramètres dynamiques.

9. Procédé selon au moins l'une des revendications 6 ou 7, pour lequel l'utilisateur est assisté par un assistant implémenté dans un logiciel lors de la mise en service de l'appareil de terrain (F1) pour l'adaptation du jeu de paramètres optimal (oP) concernant les paramètres dynamiques.

10. Procédé selon au moins l'une des revendications 6 ou 7, pour lequel l'utilisateur est assisté lors la mise en service de l'appareil de terrain (F1) pour l'adaptation concernant les paramètres dynamiques par un assistant implémenté dans un DTM de l'appareil de terrain.

11. Procédé selon au moins l'une des revendications précédentes, pour lequel un degré de validité est établi pour chacun des jeux de paramètres optimaux (oP), le degré de validité comprenant des informations sur la fréquence de l'application réussie respective et/ou la réutilisation réussie respective des jeux de paramètres optimaux (oP).

12. Procédé selon au moins l'une des revendications précédentes, pour lequel un historique de paramétrage de la pluralité d'appareils de terrain (F1, F2, F3) est créé au moyen d'un logiciel.

13. Système destiné à l'optimisation de la mise en service d'au moins un appareil de terrain parmi une pluralité d'appareils de terrain (F1, F2, F3) dans une installation (A) de la technique d'automatisation, lequel système est configuré pour exécuter le procédé selon au moins l'une des revendications 1 à 12 et comprend au moins
- Une base de données (DB) disposée à distance et destinée au stockage des informations d'application et des types d'appareil de la pluralité d'appareils de terrain (F1, F2, F3) et au stockage des jeux de paramètres (aP, sP, oP) de la pluralité d'appareils de terrain (F1, F2, F3) ;
- Une unité de calcul électronique (RE), qui accède à la base de données (DB) disposée à distance et classifie, associe, compare et/ou traite les données qui y sont stockées, et qui dispose d'un algorithme pour créer et proposer un jeu de paramètres optimal (oP) ;
- un logiciel destiné à aider un utilisateur à mettre en service un appareil de terrain parmi la pluralité d'appareils de terrain (F1), l'unité de calcul électronique (RE) étant exploitée au moyen du logiciel.

14. Système selon la revendication 13, pour lequel il s'agit, concernant les informations d'application d'un appareil de terrain (F1, F2, F3), de ses données de configuration, de ses données de procédé de mesure et/ou de ses données de tâche de mesure.

15. Système selon au moins l'une des revendications 13 ou 14, pour lequel la base de données (DB) disposée à distance et/ou l'unité de calcul (RE) sont/est accessible(s) au moyen de services Web de cloud computing, et/ou
pour lequel un suivi temporel de l'historique des paramètres de la pluralité d'appareils de terrain (F1, F2, F3) est implémenté dans le logiciel, et/ou
pour lequel le logiciel est implémenté sur l'unité de calcul (RE), sur un ordinateur de l'utilisateur et/ou sur chacun de la pluralité d'appareils de terrain (F1, F2, F3).
